# EUROPEAN PATENT APPLICATION

(11) **EP 1 792 813 A1**
(43) Date of publication of application: **06.06.2007**
(21) Application number: 06125182.3
(22) Date of filing: 01.12.2006
(51) Int. Cl.: B62J 1/08, B62K 19/36, B62K 21/22, B62K 19/32

(54) **Heigth adjustment device for saddles or handlebars**

(30) Priority: 05.12.2005 IT MI20052320
(71) Applicant: Morelli, Angelo, 29010 Pontenure (Piacenza) (IT)
(72) Inventor: Morelli, Angelo, 29010 Pontenure (Piacenza) (IT)
(74) Representative: Kratter, Carlo

(57) **Abstract**

A bicycle saddle and handlebar height adjustment device comprising a tubular element (5) provided with means (2) for its connection to said saddle (3) or handlebar and presenting a portion (4) to cooperate with a support element (6, 7) for said tubular element, said support element being associated with locking means (8) for said first tubular element which maintain the tubular element at a determined height, with the tubular element (5) there being associated elastic engagement means (9, 10) with elastic counter-means (12) associated with the support element (6, 7), to enable the relative position of said support and tubular elements to be discretely snap-adjusted.

## Description

The present invention relates to a height adjustment device for bicycle saddles or handlebars in accordance with the introduction to the main claim.

Bicycles comprise a frame into which a tubular element (tube sleeve) supporting a saddle and a tubular element supporting a handlebar are inserted. At the point at which the tubular element is inserted, the frame normally presents an axial slot, to the sides of which two projecting lugs are welded, with a screw passing between them. On tightening said screw, the frame diameter is slightly reduced to lock the tubular element at a determined height.

The height (in particular of the saddle) is usually adjusted by slackening the screw engaging the two lugs and acting on the saddle to adjust its height by forcing it to a greater or lesser extent into the frame. Having adjusted the height, the saddle is aligned with the frame by rotating the tubular element which supports it in the frame, until the correct position is achieved. The saddle is then fixed by tightening the previously slackened screw.

The known art presents may drawbacks.

In this respect, once the screw has been slackened, the tubular element supporting the saddle tends to slide downwards within the tube and the position at which the saddle was originally fixed is lost.

Moreover, if a user wishes to slightly lower or raise the saddle because of lack of comfort or ineffectiveness during pedalling, the user has necessarily to stop and carry out a difficult adjustment operation requiring considerable time, repeated measurements and various tries before the required seating improvement is achieved.

This operation is also very complex because the user should mark the initial position on the tubular element and then proceed to fine saddle height adjustment. If the user is still uncomfortable after this adjustment, the operation has to be repeated after marking another initial position. All this is incompatible with current cyclist requirements, particularly during competitions. In this respect, during cycling competitions lasting several hours the cyclist may physiologically require to change the bicycle saddle height in relation to his or her physical state, the slope of the road or the particular stage of the competition itself.

Cyclists, particularly racing cyclists, are currently not in a condition to make sophisticated saddle adjustments (corrections) during a race. Adjusting the saddle would in fact require them to stop and lose considerable time, so compromising the result of the race.

The aforestated with regard to saddles is also substantially valid in relation to handlebar height adjustment.

An object of the present invention is therefore to provide a bicycle saddle or handlebar height adjustment device which enables their precise height adjustment to be effected while mounted on the bicycle without interrupting the exercise, i.e. without having to stop, in particular during competitions.

A further object of the present invention is to provide a device which enables the saddle or handlebar height to be adjusted in a simple, quick and precise manner, without having to memorize the original position of the tube sleeve.

These and further objects are attained by a bicycle saddle or handlebar height adjustment device in accordance with the technical teachings of the accompanying claims.

Further characteristics and advantages of the invention will be apparent from the description of a preferred but non-exclusive embodiment of the bicycle saddle or handlebar height adjustment device, illustrated by way of non-limiting example in the accompanying drawings, in which:

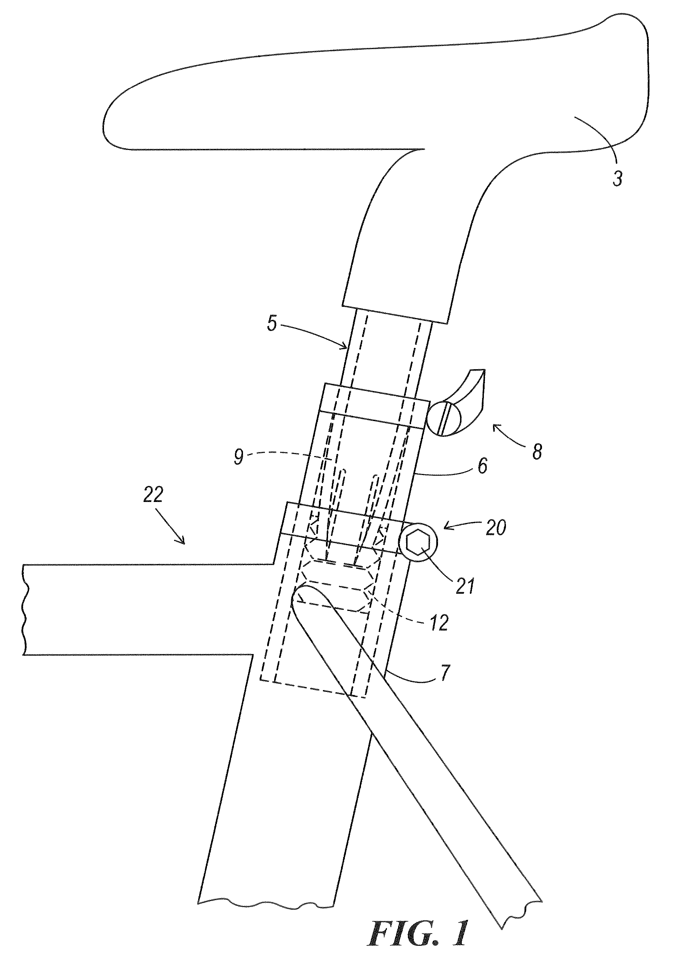

Figure 1 is a schematic view of a bicycle part on which a device of the invention is mounted;

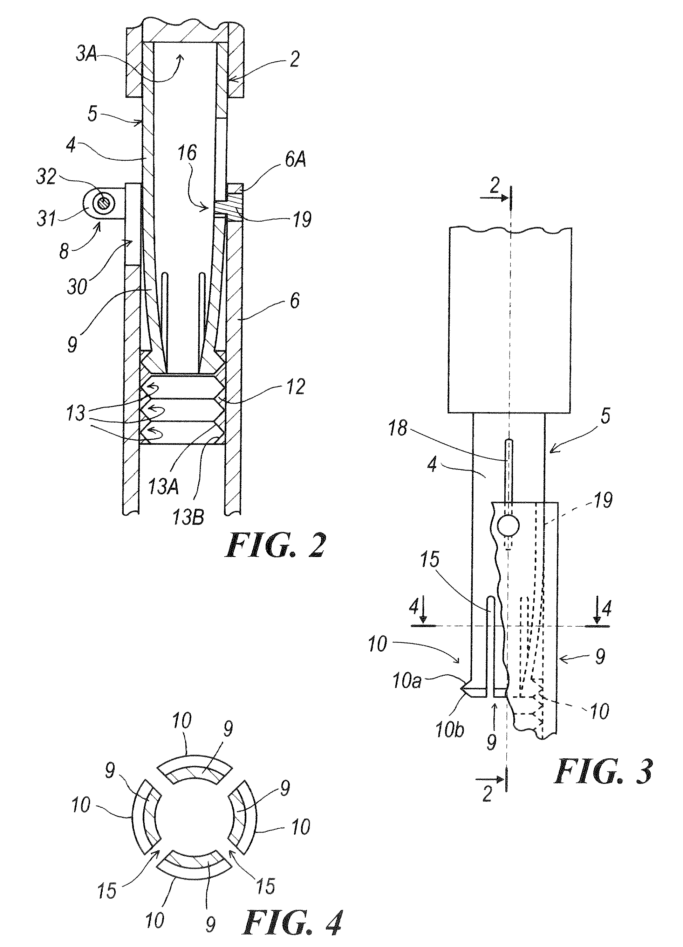

Figure 2 is a section on the line 2-2 of Figure 3;
Figure 3 is a broken front view of the device of Figure 1;
Figure 4 is a section on the line 4-4 of Figure 3:
Figure 5 is a section through an alternative embodiment of the present invention:

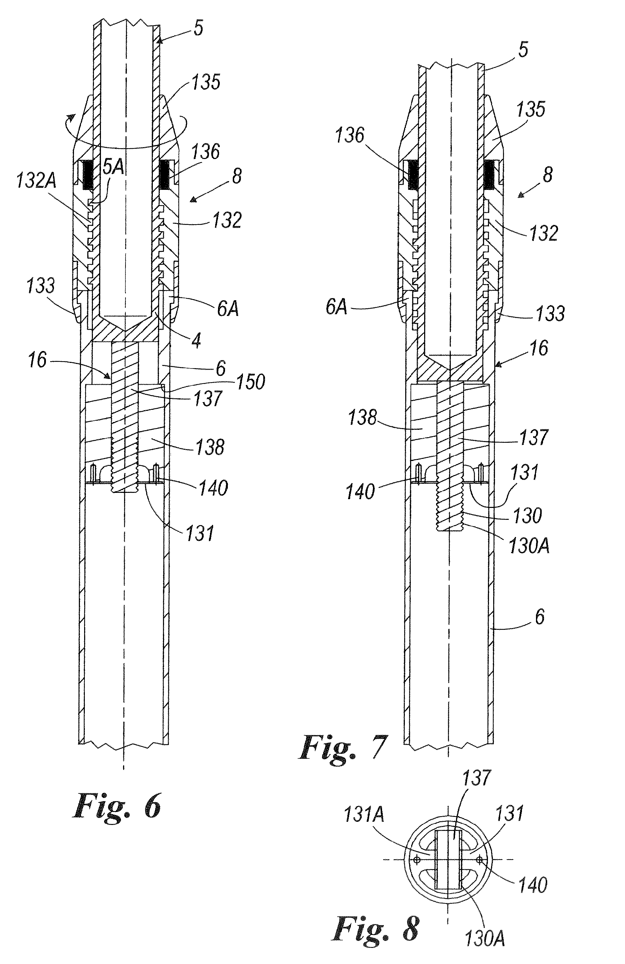

Figure 6 is a section through a different embodiment of the invention, with a tubular element in a completely extracted position;
Figure 7 is a section through the device of Figure 6 with the tubular element in the lowered position;
Figure 8 is a plan view of the device of Figure 6 from below; and
Figures 9, 10, 11, 12, 13, 14, 15 each show constructional element of the device of Figure 6.

Said figures show a bicycle saddle height adjustment device indicated overall by 1.

The adjustment device comprises a support element which in this embodiment is a tube sleeve 6, conventionally fixed into a frame 7 of a bicycle 22. The tube sleeve 6 is locked to the frame by a locking nut 21. A portion 4 of a tubular element 5 fixed to a saddle 3 is inserted into the tube sleeve 6. More in particular a portion 2 of the tubular element 5 having forcedly penetrated into an appropriate seat 3A provided for fixing the saddle 3.

In the tubular element 5 an elongate slot 18 is provided into which a dowel 19 fixed to the tube sleeve 6 is inserted. Said dowel 19 acts as a guide to prevent the tubular element 5 from withdrawing; the dowel 19 and slot 18 also prevent the tubular element 5 from rotating relative to the tube sleeve 6 while allowing limited axial movement.

In the embodiment the tubular element 5 presents four axial grooves 15 extending from one end thereof to define four blades 9, on each of which a tooth 10 is integrally provided. Each tooth 10 presents a first and a second inclined surface 10a, 10b, the use of which will be clarified hereinafter.

Fixed into the tube sleeve 6 by an interference fit there is a bush 12 on which a plurality of axially equidistant seats 13 are provided, for example spaced apart by 3 millimetres (but this dimension can be varied at will during the device construction). The seats 13 are arranged in sawtooth manner along the circumference defined by the bush, each presenting inclined surfaces 13a, 13b.

In completing the description of the invention it should be noted that in the tube sleeve 6 a cut 30 is provided, straddled by two lugs 31 welded to the tube and between which an eccentric quick release clamp 8 is provided. The lugs and clamp act as means for locking the tubular element 5 to the tube sleeve 6. The operation of the invention is apparent from the aforegoing description and is specifically as follows. The tubular element 5 is firstly inserted into the tube sleeve 6 which is fixed to the bicycle frame 7 in conventional manner by the lugs 20 and screw 21. The slot 18 is then aligned with a hole 6A provided in the tube sleeve 6, into which the dowel 19 is forced, and which presents a T cross-section. When the tubular element 5 is inserted into the tube sleeve 6, the teeth 10 provided thereon come into contact with the bush 12, with the result that these teeth 10, following flexure of the blades 9, engage in one or more seats 13 provided in the bush 12.

The tubular element is pushed into the frame until the teeth 10 become snap-located in a seat 12 positioned approximately in the centre of the bush 12, so that an equal number of further seats 13 for tooth housing lie below and above the seat 13 in which the teeth 10 are housed. The quick release clamp 8 is then tightened. It should be noted that the size of the slot 18 is such as to limit the axial movement of the tubular element 5 so that the teeth 10 always remain in contact with the bush 12. As stated, the length of the slot determines the excursion of the tubular element 5 which effectively supports the saddle.

Before mounting the bicycle, while at rest, a user slackens the screw 21, adjusts the height of the saddle 3 to its optimal position, aligns it with the frame by rotating it into its correct position, and again tightens the screw 21. The user then mounts the bicycle and starts pedalling or begins a competition. When the user confronts a hill it is knowingly desirable for the saddle to be slightly higher than its initial position to better utilize leg leverage in order to thrust the pedals with greater force for a small number of pedal movements.

Hence without ceasing pedalling and without stopping, the user rises on the pedals so that the body weight does not act on the saddle 3, and operates the quick release lever 8. Advantageously even with the quick release device in action the saddle 3 remains in its initial position, as the teeth 10, elastically housed in the seat 13, prevent the saddle from sliding downwards.

The user then grips the saddle and pulls it upwards until the teeth 10 snap into that seat 13 above the one in which the teeth were originally inserted. This movement is advantageously made simpler by the inclined surfaces 10a, 10b of the teeth and the inclined surfaces 13a, 13b of the seats 13, which facilitate elastic flexure of the blades 9. Advantageously a metallic click indicates that blades have entered the new seat. In this case the user knows that the saddle has been raised by exactly 3 millimetres. On the basis of user experience and requirements, the user may then decide to further raise the saddle by one or more clicks or to lock its position by the lever 8.

Advantageously the saddle 3 does not lose its alignment with the frame as the slot 18 and the dowel 19 prev it from undergoing any rotation. These elements also prevent complete accidental extraction of the tubular element 5 from the tube sleeve 6.

When the user finally feels tired or wishes to lower the centre of gravity, for example to achieve better bicycle control downhill, final sprinting or fast pedalling at any moment of the competition, the user lowers the seat by acting in the foresaid manner. This operation is also useful to confront a descent or an unsurfaced road, or to achieve quicker pedalling for increased descent or level speed. Again in this case, adjustment is fine and very precise. Moreover if the user should inadvertently bear with total body weight on the saddle, this can only descend by the distance permitted by the dowel 19 and slot 18. The user hence does not lose balance, making the system very safe.

A further advantage of this device is that it makes the bicycle more easily interchangeable. In this respect, during a cycle race the bicycles of team members can suffer various problems. With a device of the present invention, it is easier for a rider/competitor to pass the bicycle to a companion who, during the race and without losing time, can properly adapt the saddle to personal requirements, without having to stop and await the aid of mechanics following the race on board support vehicles, who would then have to carry out all these adjustment operations.

A device of this kind is also very useful for adjusting the position of the cyclist on the saddle. In this respect, as the tube sleeve 6 is inclined, adjusting the saddle height brings the user closer to the handlebar (on lowering the saddle) or further from the handlebar (on raising the saddle), to hence always achieve perfect seating on the saddle and avoid the need to shift the seating point on the saddle to obtain the same effects.

The described inventive concept can also be applied to handlebar height adjustment or in all those cases in which height and/or translational adjustments are made by graduated sliding of a male tube within a female tube.

In particular, handlebar height adjustment during a competition can be useful for improving the aerodynamic effect, for lowering the bicycle centre of gravity, for improving bicycle control or simply for relieving a user's back.

The bush 12 may be inserted directly into the frame 7 and provided with the teeth 13 to act as the support element, the tubular element 5 or bicycle saddle support being inserted directly into the bicycle frame (head tube). In this case, the bush 12 would be very long and present numerous seats 13 to obtain ample saddle excursion. The slot 18 would also be provided in this case, cooperating with an extractable dowel directly inserted into the frame 7. In this case the bolt 21 could be replaced by a quick release coupling.

Again in this case the advantages of the first described embodiment would be obtained, however its use would be more suitable for non-competition bicycles.

In all the aforedescribed adjustment devices the bush 12 can be eliminated and the seats 13, possibly simply of notch shape, can be provided directly in the tube sleeve 6 or frame 7.

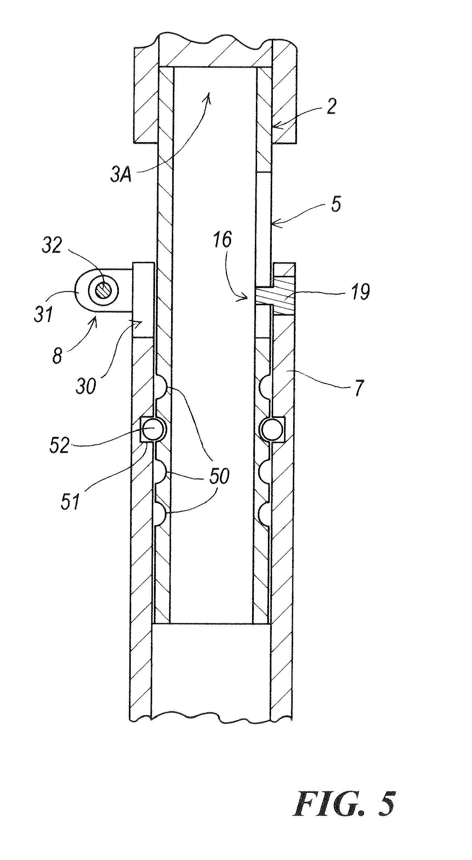

In a further embodiment, illustrated in Figure 5 in which the same reference numerals are used to indicate parts equivalent to those already described, a plurality of seats 50 are provided in the tubular element.

A groove 51 is provided in the support element 7 (preferably the bicycle frame) to house an elastic ring 52.

Essentially the seats 50 are functionally similar to the already described seats 13, while the ring 52 has the same function as the teeth 10 and the blades 9.

The seats 50 can evidently be provided directly in the support element 7, while the groove 51 and the elastic ring 52 can be associated with the tubular element 5.

In a further embodiment the locking element 8 comprises a plurality of elastic teeth to cooperate with seats suitably provided in the tubular element 5.

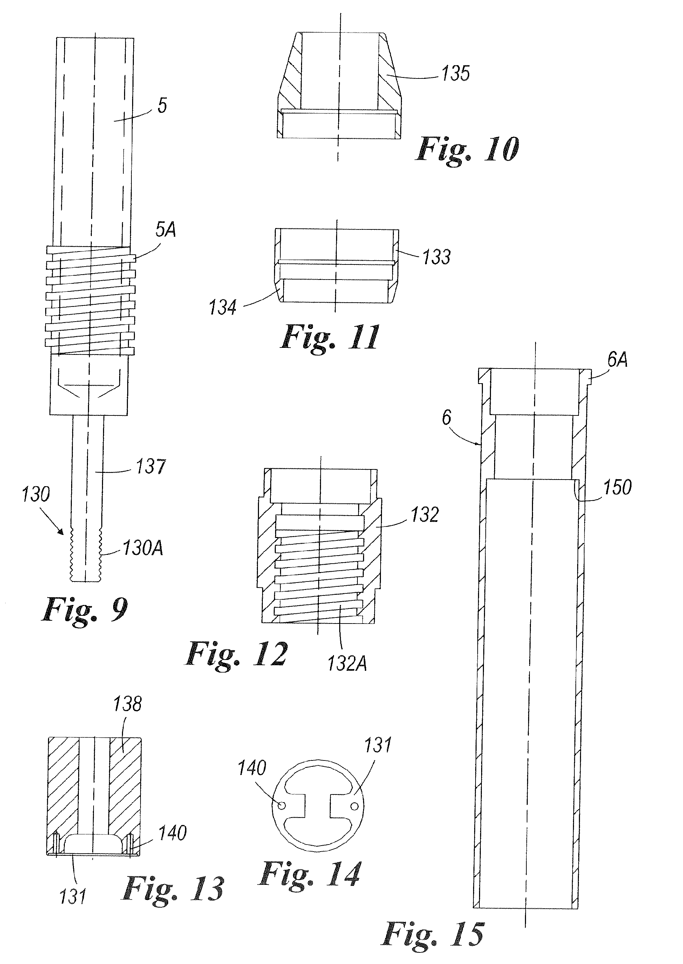

In a different but preferred embodiment (shown in Figures from 6 to 15) the locking means 8 comprise a threaded ring 132 rotatably fixed to the tube sleeve 6. The tube sleeve presents a step 6A positioned on an end portion. The ring 132 presents an end onto which a first internally hollow end element 133 mounted on the tube sleeve 6 is screwed. When the ring and the end element are screwed down, the step 6A remains locked between the two elements. The end element 133 suitably presents (Figure 11) a ledge 134 which prevents the ring/first end element unit from separating from the tube sleeve 6, but allows them to rotate relative thereto.

The threaded ring 132 presents an internal thread 132A cooperating with a corresponding external tread 5A provided on the outer surface of the tubular element 5. The internal and external thread have a pitch of 2mm/turn.

A second end element 135 mounted on the tubular element 5 is screwed on the top of the ring 132. Between the second end element and the ring a rubber element 136 is preloadedly compressed which, pressed against the surface of the tubular element 5, performs the double function of preventing entry of foreign bodies such as dust or water into the thread and of providing slight resistance to rotation of the ring 132, for stabilization and antivibration purposes.

Advantageously the first and second end element are fixed to the ring 132 by a spot of glue, which prevents it unscrewing once tightened.

An elongate portion 137 is provided at a dead end of the tubular element 5. This elongate portion 137 has a rectangular cross-section which engages in a corresponding aperture of rectangular cross-section provided in a cylindrical part 138 rigid with the tube sleeve 6. On the long faces of its rectangular section the elongate portion 137 comprises a region 130 in which sawtooth grooves 130A are provided. The cylindrical part 138 is glued to the interior of the cavity of the tube sleeve 6, abutting against a suitably provided step 150.

In the example, the sawtooth grooves 130A are spaced apart by 1.5 millimetres. The cylindrical part 138 comprises a recessed portion, perimetrally to which a spring element 131 advantageously of harmonic material is fixed. This spring element 131 presents a circular fixing part from which two elastic fingers project to engage the grooves 130A of the elongate portion 137.

The spring element is suitably fixed to the cylindrical part 138, for example by rivets 140.

Anticlockwise or clockwise discrete rotation of the ring causes the tubular element 5 to slide axially relative to the tube sleeve 6, hence adjusting the height of the saddle 3. Each time the fingers pass from one depression to the next a metallic clicking sound is emitted, unambiguously indicating to the person operating the ring that the tubular element 5, and consequently the saddle or handlebar, have changed position by a distance equal to the pitch between the depressions of the sawteeth (1.5 mm in the described example). The recessed portion of the cylindrical part 138 acts as a "resonance box" for the sound produced by the spring, which propagates into the frame and is heard with considerable intensity.

The movement of the tubular element 5 is therefore a discrete clicking movement, even though produced by a continuous screw element.

Advantageously the cooperation between the suitably inclined thread (about 2mm per turn), the elastic element and the rubber element 136 enables the device to remain fixed in a predetermined position when the ring is not operated, even if a cyclist is seated on the saddle or if jolts are transmitted to the frame due to holes or irregularities in the road surface.

In addition, by virtue of its form fit, the elongate portion 137 of the tubular element 5 engaged in the cylindrical part 138 enables the tubular element 5 and the tube sleeve 6 to remain aligned in a predetermined angular position.

Again in this case numerous variants to the described embodiment are possible. Thus the mutual alignment means provided between the tubular element 5 and the support element (such as the tube sleeve 6 or frame 7) can assume any form; for example a grooved profile can be provided externally on the tubular element 5 below the thread. This grooved profile must cooperate with an identical grooved profile provided in the support element.

Likewise the clicking elements can be provided directly on the ring, or in other positions easily identifiable by the expert of the art. As in the preceding embodiments, the ring can be provided directly on the bicycle frame.

In that case the support element can be the bicycle frame 7 directly, in contrast to the preceding embodiments in which the tube sleeve 6 is fixed in known adjustable manner to the bicycle frame.

In a still different embodiment, the cylindrical part 138 is integral with the support element interior.

## Claims

1. A bicycle saddle and handlebar height adjustment device comprising a tubular element (5) provided with means (2) for its connection to said saddle (3) and presenting a portion (4) to cooperate with a support element (6, 7) for said tubular element, said support element being associated with locking means (8) for said first tubular element which maintain the tubular element (5) in a determined position relative to the support element (6, 7), **characterised by** comprising snap engagement means which enable said device to discretely adjust the relative position of said support element and said tubular element.

2. A device as claimed in claim 1, **characterised in that** said snap engagement means comprise elastic means (9, 10, 50, 52, 131) and a plurality of seats (13, 51, 130A) in which said elastic means snap-engage.

3. A device as claimed in claim 2, **characterised in that** said elastic means are fixed to the interior of said support element and cooperate with a part (12, 137) of the tubular element carrying said seats.

4. A device as claimed in claim 3, **characterised in that** said seats (130A) are provided on an elongate portion (137) of the tubular element (5).

5. A device as claimed in claim 3, **characterised in that** said seats (50) are provided directly on the lateral surface of the tubular element (5).

6. A device as claimed in claim 3, **characterised in that** said seats (13) are provided in a bush (12) rigid with the support element (6, 7).

7. A device as claimed in claim 1, **characterised in that** alignment means (16) are provided between said support element (6, 7) and said tubular element (5) to maintain a determined angular position between the tubular element (5) and the support element (6, 7).

8. A device as claimed in claim 7, **characterised in that** said alignment means comprise a form fit.

9. A device as claimed in claims 4 and 8, **characterised in that** said form fit is provided between said elongate portion (137) and a cylindrical part (138) inside the support element, said elastic means being fixed to said support element (6, 7), said cylindrical part acting as a support for said elastic means (131).

10. A device as claimed in claim 9, **characterised in that** said elastic means (131) presents a circular fixing portion from which two fingers extend, each arranged to cooperate with said seats (130A) provided on said elongate portion (137).

11. A device as claimed in claim 8, **characterised in that** said alignment means comprise a slot (18) provided in the tubular element (5) and cooperating with a dowel (19) inserted into a hole provided in the wall of the support element (6, 7), said slot limiting the vertical movement of the tubular element (5).

12. A device as claimed in claim 1, **characterised in that** said locking means (8) comprise a threaded (132A) ring (132) rotatably fixed to said support element (6, 7), said tubular element (5) presenting a thread (5A) cooperating with the thread (132A) of said ring (132).

13. A device as claimed in claim 12, **characterised in that** said ring is rotatably fixed to said support element (6, 7) by a first end element (133) screwed onto the ring and cooperating with a step on said support element.

14. A device as claimed in claim 13, **characterised in that** said ring (132) presents a second end element (135) to preload a rubber gasket element (136).

15. A device as claimed in claim 1, **characterised in that** said elastic engagement means (9, 10) comprise at least one tooth (10) provided on the surface of said tubular element (5) at one end thereof, said tooth (10) presenting inclined lead-in surfaces (10a, 10b) facilitating its elastic flexure when the tubular element (5) is pulled upwards or downwards.

16. A device as claimed in claim 15, **characterised in that** said tubular element (5) presents at least two axial grooves (15) which extend from an end thereof such as to form at least one flexible blade (9) on which said tooth (10) is disposed, said blade facilitating radial elastic movement of said tooth (10).

17. A device as claimed in claim 15, **characterised in that** said seats (13) are disposed along a circumference and provided directly in the support element (6, 7).

18. A device as claimed in claim 1, **characterised in that** said tubular element (5) is insertable into the support element (6, 7), the locking element (8) being arranged to clamp the support element (6, 7) about the tubular element (6).

19. A device as claimed in claim 1, **characterised in that** said support element (6) is a saddle tube sleeve fixed to the bicycle frame by a fixing device (20), the tubular element (5) being inserted into said support element (6).

20. A device as claimed in claim 1, **characterised in that** said support element (7) is a bicycle frame into which said tubular element (5) is directly inserted.

21. A device as claimed in claim 1, **characterised in that** said elastic engagement means comprise a plurality of seats (50) and an elastic ring (52) housed in a groove (51).
